(19) Europäisches Patentamt European Patent Office Office européen des brevets

(11) **EP 2 940 485 B1**

(12) **FASCICULE DE BREVET EUROPEEN**

(45) Date de publication et mention
de la délivrance du brevet:
**22.02.2017 Bulletin 2017/08**

(51) Int Cl.:
***G01S 3/74*** *(2006.01)*

(21) Numéro de dépôt: **15165801.0**

(22) Date de dépôt: **29.04.2015**

(54) **PROCÉDÉ ET DISPOSITIF DE GONIOMÉTRIE EXPLOITANT DES RANGEMENTS RECTANGULAIRES DES STATISTIQUES**

GONIOMETRIEVERFAHREN UND -VORRICHTUNG, DAS SICH DER RECHTWINKLIGEN ORDNUNGEN VON STATISTIKEN BEDIENT

GONIOMETRY METHOD AND DEVICE USING RECTANGULAR STATISTICAL RANKINGS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.04.2014 FR 1401004**

(43) Date de publication de la demande:
**04.11.2015 Bulletin 2015/45**

(73) Titulaire: **THALES
92400 Courbevoie (FR)**

(72) Inventeurs:
• **Chevalier, Pascal
92622 GENNEVILLIERS Cedex (FR)**
• **Becker, Hanna
06900 SOPHIA-ANTIPOLIS (FR)**

(74) Mandataire: **Dudouit, Isabelle et al
Marks & Clerk France
Conseils en Propriété Industrielle
Immeuble " Visium "
22, avenue Aristide Briand
94117 Arcueil Cedex (FR)**

(56) Documents cités:
**EP-A1- 2 607 915    FR-A1- 2 954 513**

**Description**

L'invention concerne notamment un procédé et un dispositif de goniométrie aux ordres supérieurs pour traiter des sources exploitant des rangements rectangulaires des statistiques des données. L'invention trouve son application dans le domaine de la goniométrie, estimation des directions d'arrivée des sources incidentes sur un réseau de capteurs exploitant les statistiques d'ordre supérieur à 2 et paires des données.

L'invention trouve notamment son application dans tous les systèmes qui nécessitent un degré de résolution spatiale important (environnements à grand nombre d'émetteurs, réseau à faible nombre de capteurs, erreurs.

Les techniques de goniométrie à haute résolution à des ordres pairs arbitraires (2q) permettent de traiter un nombre arbitrairement grand de sources à partir d'un réseau à nombre de capteurs arbitrairement faible.

L'art antérieur décrit différentes méthodes de goniométrie développées autour de l'algorithme connu sous le nom d'algorithme MUSIC à différents ordres. Pour pallier les limitations de 2-MUSIC et 4-MUSIC, en présence de sources multiples, l'algorithme de goniométrie 2q-MUSIC ($q \geq 1$) [1] a été développé pour traiter des sources non-Gaussiennes à partir de rangements carrés des statistiques d'ordre 2q des données. Il a été montré [1] que l'algorithme 2q-MUSIC offre des performances croissantes avec $q$, en termes de résolution, de robustesse aux erreurs de modèle et de nombre de sources pouvant être traitées. Cet accroissement de performance est directement lié à l'accroissement virtuel de l'ouverture effective et du nombre d'antennes, $N$, du réseau, introduisant le concept de réseau virtuel aux ordres supérieurs présenté dans [2]. En particulier, il a été montré que, pour $q \geq 2$, le nombre d'antennes du réseau virtuel dépend de la manière dont les statistiques d'ordre 2q des données sont rangées dans la matrice carrée des statistiques, de dimension ($N^q$ x $N^q$), mettant en évidence l'existence d'un rangement carré optimal. Ce rangement carré optimal engendre un réseau virtuel contenant O($N^q$) antennes virtuelles, ce qui signifie en particulier que l'algorithme 2q-MUSIC peut traiter jusqu'à O($N^q$) sources statistiquement indépendantes. D'autre part, il a été montré récemment dans [3] qu'en rangeant les statistiques d'ordre 2q des données dans un vecteur, $\boldsymbol{c}_{2q,x}$, de dimension ($N^{2q}$ x 1), plutôt qu'une matrice carrée, $C_{2q,x}$, de dimension ($N^q$ x $N^q$), il est possible de construire un réseau linéaire non uniforme particulier de N antennes, appelé réseau emboîté à 2q niveaux (2q-Level Nested array), qui engendre un réseau virtuel d'ordre 2q correspondant à un réseau linéaire uniforme de O($N^{2q}$) antennes. Il devient alors possible d'utiliser un algorithme de lissage spatial [4] pour estimer les directions d'arrivée de O($N^{2q}$) sources statistiquement indépendantes, au lieu de O($N^q$), à partir d'une matrice de covariance du type $C_{2q,x} \, C_{2q,x}^{H}$, où H signifie transposé et conjugué. Ce résultat montre qu'en rangeant les statistiques d'ordre 2q des données dans un vecteur plutôt qu'une matrice carrée, il est possible d'augmenter le nombre de sources à traiter pourvu que le réseau d'antennes et l'algorithme soient choisis judicieusement.

Les techniques de l'art antérieur connues du demandeur ne permettent pas a priori la mise en oeuvre de techniques de goniométrie aux ordres 2q à partir de rangements rectangulaires et de réseaux d'antennes arbitraires comme il va être décrit.

Le brevet FR 2 954 513 du demandeur concerne l'estimation d'un nombre de sources incidentes par estimation de la statistique du bruit.

Le brevet EP 2 607 915 A1 concerne un procédé de localisation de sources émettrices par exploitation d'un couplage mutuel d'un réseau d'antennes et d'un récepteur mono-voie à commutation lente.

L'invention concerne un procédé qui repose sur une approche différente de celle de l'art antérieur et qui fait intervenir des rangements rectangulaires des statistiques d'ordre 2q des données pour des réseaux d'antennes arbitraires. De tels rangements rectangulaires des statistiques d'ordre supérieur des données permettent notamment d'optimiser le compromis entre les performances et le nombre de sources à traiter. En outre, ils permettent également une diminution de complexité à performances constantes, encore accrue par les rangements non redondants.

L'invention concerne un procédé d'estimation des directions d'arrivée de sources d'incidence sur un réseau comprenant N antennes à bande étroite recevant chacune la contribution de P sources, les observations reçues sur chaque antenne engendrant des statistiques pouvant se mettre sous la forme de matrice de cumulants d'ordre 2q, avec q>1, dont les coefficients sont les cumulants circulaires d'ordre 2q, Cum[$x_{i_1}(t)$,..., $x_{i_q}(t)$, $x_{i_{q+1}}(t)^*$,..., $x_{i_{2q}}(t)^*$], caractérisé en ce qu'il comporte au moins les étapes suivantes :

- on range les statistiques d'ordre 2q des observations afin d'obtenir une matrice $C_{2q,x}^{(v,l)}$ rectangulaire d'ordre 2q de dimension ($N^v$ x $N^{2q-v}$), dont les coefficients sont les cumulants circulaires d'ordre 2q des observations, le rangement étant réalisé de la manière suivante :
- on décompose un 2q-uplet, ($i_1$,.., $i_q$, $i_{q+1}$,.., $i_{2q}$), d'indices $i_j$ ($1 \leq j \leq 2q$) ($1 \leq i_j \leq N$), en un $v$-uplet et un ($2q-v$)-uplet, indexés respectivement par $v$ et $l$, et définis respectivement par ($i_1$, $i_2$,...., $i_l$, $i_{q+1}$,...., $i_{q+v-l}$) et ($i_{q+v-l+1}$,...., $i_{2q}$, $i_{l+1}$,...., $i_q$), où les N valeurs du $v$-uplet et les N valeurs du ($2q-v$)-uplet sont notées par des entiers $I_{v,l}$ et $J_{v,l}$, tels que $1 \leq I_{v,l} \leq N^v$ et $1 \leq J_{v,l} \leq N^{2q-v}$,

$$I_{v,l} \quad \triangleq \quad \sum_{j=1}^{l} N^{v-j}(i_j - 1) + \sum_{j=1}^{v-l} N^{v-l-j}(i_{q+j} - 1) + 1$$

$$J_{v,l} \quad \triangleq \quad \sum_{j=1}^{q-v+l} N^{2q-v-j}(i_{q+v-l+j} - 1) + \sum_{j=1}^{q-l} N^{q-l-j}(i_{l+j} - 1) + 1$$

- on utilise une propriété d'invariance par permutation des cumulants et on déduit que :

$$\mathrm{Cum}[x_{i_1}(t),\ldots, x_{i_q}(t), x_{i_{q+1}}(t)^*, \ldots, x_{i_{2q}}(t)^*] = \mathrm{Cum}[x_{i_1}(t),\ldots, x_{i_l}(t), x_{i_{q+1}}(t)^*, \ldots,$$

$$x_{i_{q+v-l}}(t)^*, x_{i_{q+v-l+1}}(t)^*,\ldots, x_{i_{2q}}(t)^*, x_{i_{l+1}}(t),\ldots, x_{i_q}(t)],$$

- on considère alors que le cumulant précédent est l'élément $[I_{v,l}, J_{v,l}]$ de la matrice rectangulaire des cumulants,
- on estime les valeurs des directions en utilisant un algorithme de goniométrie appliqué à la matrice rectangulaire estimée.

Selon une variante de réalisation, on définit un algorithme music en exécutant les étapes suivantes :

2.1) estimer, $\hat{C}_{2q,x}^{(v,l)}$ de la matrice $C_{2q,x}^{(v,l)}$ pour $K$ échantillons vectoriels $x(k)$, $1 \le k \le K$, en utilisant un estimateur de cumulants d'ordre 2q des observations

2.2) une décomposition singulière de la matrice $\hat{C}_{2q,x}^{(v,l)}$ et une extraction d'une estimée $\hat{U}_{2q,h}^{(v,l)}$ de la matrice unitaire $U_{2q,h}^{(v,l)}$ des vecteurs propres de $C_{2q,x}^{(v,l)}$

2.3) un calcul du pseudo-spectre estimé en appliquant la formule suivante et une recherche des directions associées aux minima locaux de cette fonction

$$\hat{P}_{2q\text{-}Music(v,\,l)}(\theta, \varphi) \quad \triangleq$$

$$[a(\theta, \varphi)^{\otimes l} \otimes a(\theta, \varphi)^{*\otimes(v-l)}]^{\mathrm{H}} \hat{U}_{2q,n}^{(v,l)} \hat{U}_{2q,n}^{(v,l)\,\mathrm{H}} [a(\theta, \varphi)^{\otimes l} \otimes a(\theta, \varphi)^{*\otimes(v-l)}]$$

où Music correspondant à la fonction MUSIC,
$\otimes$ est le produit de Kronecker
$\alpha(\theta, \varphi)$. est le vecteur directeur d'une source, $\theta$, angle d'azimut, $\varphi$ angle d'élévation,
$a(\theta, \varphi)^{\otimes l} = a(\theta, \varphi) \otimes a(\theta, \varphi) \otimes \ldots \otimes a(\theta, \varphi)$ avec un nombre de produits de Kronecker égal à $l$-1
q ordre choisi, l indice de rangement.

Selon une autre variante, le procédé comporte une étape dans laquelle on élimine la redondance due à la symétrie des cumulants.
On élimine, par exemple, la redondance résultant des vecteurs directeurs virtuels ayant des composantes avec la même fonction en définissant une matrice de réduction droite $Z_{q,2}^{(v,l)}$ et une matrice de réduction gauche $Z_{q,1}^{(v,l)}$ et on obtient comme matrice rectangulaire de cumulants des observations :

$$C_{2q,x,nr}^{(v,l)} \quad \triangleq \quad Z_{q,1}^{(v,l)} \; C_{2q,x}^{(v,l)} \; Z_{q,2}^{(v,l)\,\mathrm{H}}$$

ce qui donne

$$C_{2q,x,nr}^{(v,l)} = \sum_{g=1}^{G} Z_{q,1}^{(v,l)} \, [A_g^{\otimes l} \otimes A_g^{*\otimes(v-l)}] \, C_{2q,sg}^{(v,l)} \, [A_g^{\otimes(q-v+l)} \otimes A_g^{*\otimes(q-l)}]^{\mathrm{H}} \, Z_{q,2}^{(v,l)\,\mathrm{H}}$$

$$+ \eta_2 \, Z_{1,1}^{(v,l)} \, V(v,l) \, Z_{1,2}^{(v,l)\,\mathrm{H}} \, \delta(q-1)$$

avec

⊗ est le produit de Kronecker

$Ag^{\otimes l}$ est la $(N^l \times P_g^l)$ matrice définie par $Ag^{\otimes l} = Ag \otimes Ag \otimes ... \otimes Ag$ avec un nombre de produits de Kronecker égal à $l$-1,
G le nombre de groupes de sources,
H le transposé et conjugué,
$\eta_2$ est la puissance moyenne du bruit par capteur,
$\delta(.)$ est le symbole de Kronecker,

La matrice peut être utilisée pour des sources arbitraires statistiquement indépendantes ou dépendantes, pas uniquement avec des sources appartenant à une classe ou à l'autre.

Le procédé va conserver, par exemple, uniquement un capteur virtuel associé aux vecteurs directeurs virtuels parmi chaque groupe de capteurs virtuels coïncidant.

Le procédé peut aussi moyenner les capteurs virtuels associés à un même groupe de capteurs virtuels coïncidant.

Selon une variante de mise en oeuvre, le procédé comporte au moins les étapes suivantes pour la goniométrie des sources:

9.1) estimation $\hat{C}_{2q,x,nr}^{(v,l)}$ de la matrice $C_{2q,x,nr}^{(v,l)}$ à partir de K observations $x(k)$, $1 \le k \le K$, en utilisant un estimateur à l'ordre 2q,

9.2) SVD de la matrice estimée $\hat{C}_{2q,x,nr}^{(v,l)}$ et estimation d'une base orthonormée de l'espace bruit $\hat{U}_{2q,n,nr}^{(v,l)}$,

9.3) détermination à partir des vecteurs directeurs virtuels associés à la matrice rectangulaire $C_{2q,x,nr}^{(v,l)}$, $a_{q,p,1,nr}^{(v,l)} \triangleq Z_{q,1}^{(v,l)} \, a_{q,p,1}^{(v,l)}$, du pseudo-spectre suivant et recherche des directions engendrant des minimas locaux

$$\hat{P}_{\mathrm{NR}\text{-}2q\text{-}Music(v,\,l)}(\theta, \varphi) \triangleq a_{q,p,1,nr}^{(v,l)\,\mathrm{H}} \, \hat{U}_{2q,n,nr}^{(v,l)} \, \hat{U}_{2q,n,nr}^{(v,l)\,\mathrm{H}} \, a_{q,p,1,nr}^{(v,l)} \quad .$$

L'invention concerne aussi un dispositif d'estimation des directions d'arrivée de sources d'incidence sur un réseau comprenant N antennes à bande étroite recevant chacune la contribution de P sources, les observations reçues sur chaque antenne caractérisé en ce qu'il comporte un moyen de traitement adapté à mettre exécuter les étapes du procédé selon l'invention.

D'autres caractéristiques et avantages de la présente invention apparaîtront mieux à la lecture de la description qui suit d'exemples de réalisation donnés à titre illustratif et nullement limitatifs annexés des figures qui représentent :

• La figure 1, une représentation d'un signal incident en trois dimensions,
• La figure 2, un exemple de dispositif adapté à la mise en oeuvre du procédé selon l'invention,
• La figure 3, une illustration possible pour la goniométrie.

Avant de détailler les étapes mises en oeuvre par le procédé selon l'invention, nous allons rappeler quelques données utiles à sa compréhension.

On considère un réseau de N antennes à bande étroite (BE), supposées identiques et on note $x(t)$ le vecteur des enveloppes complexes des signaux en sortie des antennes. Chaque antenne ou capteur est supposé recevoir la contribution de *P* sources centrées, stationnaires, qui peuvent être statistiquement indépendantes ou non, et bruitées. On fait l'hypothèse que les *P* sources peuvent être divisées en *G* groupes, avec $P_g$ sources dans le groupe *g*, de façon telle que les sources dans chaque groupe soient supposées statistiquement corrélées, mais non parfaitement cohérentes, alors que les sources qui appartiennent à des groupes différents sont supposes être statistiquement indépendantes.

En particulier, $G = P$ correspond à $P$ sources statistiquement indépendantes alors que $G = 1$ correspond au cas où toutes les sources sont dépendantes. Les paramètres $P_g$ sont tels que :

$$P = \sum_{g=1}^{G} P_g \qquad (1)$$

Sous ces hypothèses, le vecteur d'observation peut s'écrire

$$\boldsymbol{x}(t) \approx \sum_{p=1}^{P} s_p(t)\, \boldsymbol{a}(\theta_p, \varphi_p) + \boldsymbol{n}(t) \stackrel{\Delta}{=} A\, \boldsymbol{s}(t) + \boldsymbol{n}(t)$$

$$= \sum_{g=1}^{G} A_g\, \boldsymbol{s}_g(t) + \boldsymbol{n}(t) = \sum_{g=1}^{G} \boldsymbol{x}_g(t) + \boldsymbol{n}(t) \qquad (2)$$

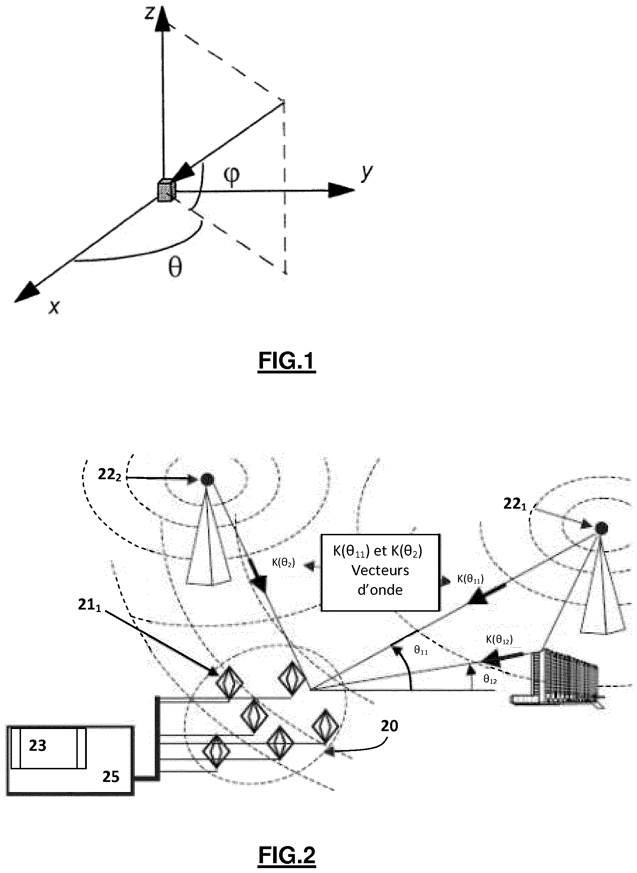

où $\boldsymbol{n}(t)$ est le vecteur bruit, supposé centré (zero-mean) et Gaussien, $s_p(t)$ est l'amplitude complexe de la source $p$, $\boldsymbol{s}(t)$ indépendant de $\boldsymbol{n}(t)$ est le vecteur dont les composantes sont les $s_p(t)$ $\theta_p$ et $\varphi_p$ sont les angles d'azimut et d'élévation de la source $p$ (Figure 1), et $A$ est la matrice ($NxP$) des vecteurs directeurs des sources $\alpha(\theta_p, \varphi_p)$ ($1 \le p \le P$), laquelle contient l'information relative aux directions d'arrivée des sources, $A_g$ est la sous-matrice ($N \times Pg$) de $A$ relative au $g^{\text{ième}}$ groupe des sources, $\boldsymbol{s}_g(t)$ est un sous-vecteur correspondant ($P_g$ x 1) de $\boldsymbol{s}(t)$ et $\boldsymbol{x}_g(t) \stackrel{\Delta}{=} A_g\, \boldsymbol{s}_g(t)$. En l'absence de couplage entre antennes, et en faisant l'hypothèse de propagation par onde plane, la composante $n$ du vecteur $\alpha(\theta_p, \varphi_p)$, notée $\alpha_n(\theta_p, \varphi_p)$, peut s'écrire :

$$a_n(\theta_p, \varphi_p) = \exp\{j2\pi\, \boldsymbol{k}(\theta_p, \varphi_p)^{\mathrm{T}}\, \boldsymbol{p}_n / \lambda\} \qquad (3)$$

où $\lambda$ est la longueur d'onde, $\boldsymbol{p}_n \stackrel{\Delta}{=} [x_n,\ y_n,\ z_n]^{\mathrm{T}}$ est le vecteur dont les composantes sont les coordonnées du capteur $n$ du réseau d'antennes et $\boldsymbol{k}(\theta_p, \varphi_p) \stackrel{\Delta}{=} [\cos(\theta_p)\cos(\varphi_p),\, \sin(\theta_p)\cos(\varphi_p),\, \sin(\varphi_p)]^{\mathrm{T}}$ est le vecteur d'onde de la source p.

Le procédé selon l'invention exploite l'information contenue dans les cumulants circulaires des données d'ordre 2q Cum$[x_{i_1}(t),..., x_{i_q}(t), x_{i_{q+1}}(t)^*, ..., x_{i_{2q}}(t)^*]$($1 \le i_j \le N$) ($1 \le j \le 2q$), où * correspond au complexe conjugué.

Dans les situations pratiques, les statistiques d'ordre 2q ne sont pas connues a priori, et doivent être estimées à partir de $K$ échantillons de données $\boldsymbol{x}(k) \stackrel{\Delta}{=} \boldsymbol{x}(kT_e)$, $1 \le k \le K$, où $T_e$ est la période d'échantillonnage. Pour des observations centrées, stationnaires et ergodiques, un estimateur empirique de Cum$[x_{i_1}(t),..., x_{i_q}(t), x_{i_{q+1}}(t)^*, ..., x_{i_{2q}}(t)^*]$, non biaisé asymptotiquement et consistent peut être construit à partir de la formule connue de Leonov-Shiryaev [6], donnant l'expression du cumulant d'ordre n de $x(t)$ comme une fonction de ses moments d'ordre $p$ avec $1 \le p \le n$, en remplaçant dans le cumulant tous les moments par leur estimée empirique [2]. Toutefois, dans le contexte de radiocommunication, la plupart des sources ne sont pas stationnaires mais sont cyclo-stationnaires, (modulations numériques). Pour des observations cyclo-stationnaires, Cum$[x_{i_1}(t),..., x_{i_q}(t), x_{i_{q+1}}(t)^*, ..., x_{i_{2q}}(t)^*]$ devient dépendant du temps et il est possible sans sortir du cadre de l'invention de l'étendre en remplaçant les cumulants par leur moyenne temporelle sur un intervalle de durée finie. En faisant l'hypothèse de données cyclo-ergodiques, la moyenne temporelle des cumulants d'ordre 2q des données sera estimée à partir des données échantillonnées par un estimateur non empirique connu de l'homme du métier [5].

Le procédé selon l'invention qui va être détaillé est par exemple mis en oeuvre dans un système de traitement d'antennes, figure 2, qui comprend, par exemple, un réseau 20 de N antennes 21i, chaque antenne recevant les contributions ou multi-trajets de plusieurs émetteurs radio-électriques, ou P sources $22_1$, $22_2$, et chaque antenne 21i est reliée à un récepteur 25 pourvu d'un processeur 26 adapté à exécuter les étapes du procédé selon l'invention. On définit par source, un trajet d'un émetteur. Les antennes du réseau reçoivent les sources avec une phase et une amplitude dépendant de leur angle d'incidence ainsi que de la position des antennes. Les angles d'incidences peuvent être paramétrés, soit en 1 D en azimut, soit en 2D en azimut et en élévation.

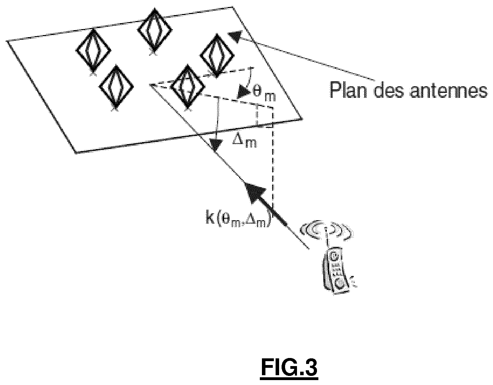

La figure 3 montre qu'une goniométrie s'effectue en 1 D lorsque les ondes des émetteurs se propagent dans un même plan et qu'il faut appliquer une goniométrie 2 D dans les autres cas. Ce plan P peut être celui du réseau d'antenne où l'angle d'élévation est nul.

De façon à ranger les cumulants circulaires d'ordre 2q, dans une matrice rectangulaire, on introduit deux nombres entiers choisis de manière arbitraire, $v$ et $l$, tels que $0 \le v \le 2q$ et $\sup(0, v-q) \le l \le \mathrm{Inf}(v, q)$. le nombre entier $v$ a notamment pour fonction de contrôler la taille ($N^v$ x $N^{2q-v}$) de la matrice rectangulaire des cumulants d'ordre 2q comme il sera détaillé par la suite. Le nombre entier $l$ contrôle la façon dont les cumulants circulaires d'ordre 2q sont rangés dans la matrice rectangulaire. De manière plus précise, pour des valeurs données de $q$ et $v$, on va décomposer un 2q-uplet, ($i_1,.., i_q, i_{q+1},..., i_{2q}$), d'indices $i_j (1 \le j \le 2q)$ $(1 \le i_j \le N)$, en un $v$-uplet et un ($2q-v$)-uplet, indexés respectivement par $v$ et $l$, et définis respectivement par ($i_1, i_2,...., i_l, i_{q+1},...., i_{q+v-l}$) et ($i_{q+v-l+1},..., i_{2q}, i_{l+1},...., i_q$). Comme les indices $i_j (1 \le j \le 2q)$ varient de 1 à $N$, le $v$-uplet et le ($2q-v$)-uplet prennent un nombre de valeurs égal à respectivement $N^v$ et $N^{2q-v}$. En notant les $N^v$ valeurs du $v$-uplet et les $N^{2q-v}$ valeurs du ($2q-v$)-uplet par des entiers $I_{v,l}$ et $J_{v,l}$, tels que $1 \le I_{v,l} \le N^v$ et $1 \le J_{v,l} \le N$ , on obtient :

$$I_{v,l} \triangleq \sum_{j=1}^{l} N^{v-j}(i_j - 1) + \sum_{j=1}^{v-l} N^{v-l-j}(i_{q+j} - 1) + 1 \qquad (4a)$$

$$J_{v,l} \triangleq \sum_{j=1}^{q-v+l} N^{2q-v-j}(i_{q+v-l+j} - 1) + \sum_{j=1}^{q-l} N^{q-l-j}(i_{l+j} - 1) + 1 \qquad (4b)$$

En utilisant la propriété d'invariance par permutation des cumulants, il est possible d'en déduire que :

$$\mathrm{Cum}[x_{i1}(t),..., x_{iq}(t), x_{iq+1}(t)^*, ..., x_{i2q}(t)^*] = \mathrm{Cum}[x_{i1}(t),..., x_{il}(t), x_{iq+1}(t)^*, ...,$$

$$x_{iq+v-l}(t)^*, x_{iq+v-l+1}(t)^*,..., x_{i2q}(t)^*, x_{il+1}(t),.., x_{iq}(t)]$$

En faisant l'hypothèse que le cumulant précédent est l'élément $[I_{v,l}, J_{v,l}]$ de la matrice rectangulaire des cumulants notée $C_{2q,x}^{(v,l)}$, sous l'hypothèse d'un bruit Gaussien et en utilisant le produit de Kronecker, la ($N^v$ x $N^{2q-v}$) matrice $C_{2q,x}^{(v,l)}$ peut s'écrire :

$$C_{2q,x}^{(v,l)} = \sum_{g=1}^{G} [A_g^{\otimes l} \otimes A_g^{*\otimes(v-l)}] \, C_{2q,sg}^{(v,l)} \, [A_g^{\otimes(q-v+l)} \otimes A_g^{*\otimes(q-l)}]^{\mathrm{H}} +$$

$$\eta_2 \, V(v, l) \, \delta(q - 1) \qquad (5)$$

où $C_{2q,sg}^{(v,l)}$ est la ($P_g^v$ x $P_g^{2q-v}$) matrice des cumulants circulaires d'ordre 2q de $s_g(t)$, $\eta_2$ est la puissance moyenne du bruit par capteur ou antenne, $V(v, l)$ définie pour $q = 1$ seulement est la ($N$ x $N^{2-v}$) ($0 \le v \le 2$) matrice de cohérence spatiale rectangulaire et normalisée de bruit telle que la puissance totale d'entrée est $N_{\eta_2}$, $\delta(.)$ est le symbole de Kronecker, $\otimes$ est le produit de Kronecker et $A_g^{\otimes l}$ est la ($N^l$ x $P_g^l$) matrice définie par $A_g^{\otimes l} = A_g \otimes A_g \otimes ... A_g \otimes A_g$ avec un nombre de produits de Kronecker égal à $l$ - 1. La matrice rectangulaire de cumulant circulaire $C_{2q,x}^{(v,l)}$ est décrite par trois paramètres $q$, $v$ et $l$ qui caractérisent l'ordre des statistiques, la taille de la matrice des cumulants, et le rangement des statistiques dans la matrice, ces paramètres sont choisis par l'utilisateur. L'entier $l$ est tel que $0 \le l \le v$, $0 \le l \le q$ et $0 \le v - l \le q$, ce qui conduit à $\sup(0, v - q) \le l \le \mathrm{Inf}(v, q)$. En particulier, pour $v = q$, $C_{2q,x}^{(v,l)}$ se réduit à la matrice ($N$ x $N^q$), notée $C_{2q,x}(l)$ dans [1] [2] et définie par :

$$C_{2q,x}^{(q,l)} = \sum_{g=1}^{G} [A_g^{\otimes l} \otimes A_g^{*\otimes(q-l)}] \, C_{2q,sg}^{(q,l)} \, [A_g^{\otimes l} \otimes A_g^{*\otimes(q-l)}]^{H} + \eta_2 \, V(q, l)$$

$$\delta(q-1) \hspace{8cm} (6)$$

avec $0 \le l \le q$. Dans le cas de sources statistiquement indépendantes, l'expression (5) s'écrit :

$$C_{2q,x}^{(v,l)} = \sum_{p=1}^{P} c_{2q,sp} \, a_{q,p,1}^{(v,l)} \, a_{q,p,2}^{(v,l)H} + \eta_2 \, V(v, l) \, \delta(q-1) \hspace{3cm} (7)$$

où $c_{2q,sp} \overset{\Delta}{=} \mathrm{Cum}[s_{i1}(t),\ldots, s_{iq}(t), s_{iq+1}(t)^{*}, \ldots, s_{i2q}(t)^{*}]$ avec $i_j = p \, (1 \le j \le 2_q)$ est l'autocumulant circulaire d'ordre 2q de $s_p(t)$, $a_p$ est une notation pour $a(\theta_p, \varphi_p)$ et les vecteurs $a_{q,p,1}^{(v,l)}$ et $a_{q,p,2}^{(v,l)}$ sont définis par :

$$a_{q,p,1}^{(v,l)} \overset{\Delta}{=} a_p^{\otimes l} \otimes a_p^{*\otimes(v-l)} \hspace{6cm} (8a)$$

$$a_{q,p,2}^{(v,l)} \overset{\Delta}{=} a_p^{\otimes(q-v+l)} \otimes a_p^{*\otimes(q-l)} = a_{q,p,1}^{(2q-v, \, q-v+l)} \hspace{3cm} (8b)$$

Quelques exemples de matrices de cumulants vont être donnés pour expliciter le procédé selon l'invention pour un ordre 2 et pour un ordre 4 pour $v \ge q$ et pour des sources indépendantes statistiquement. Au deuxième ordre, $q = 1$ on considère $v$ tel que $1 \le v \le 2$, ce qui génère le paramètre $l$ tel que $v - 1 \le l \le 1$. Pour $(q, v, l) = (1, 1, 1)$, la matrice $(N \times N)$ $C_{2q,x}^{(v,l)}$ correspond à la matrice de covariance définie par

$$C_{2,x}^{(1,1)} = \mathrm{E}[x(t)\,x(t)^{H}] = \sum_{p=1}^{P} c_{2,sp} \, a_p \, a_p^{H} + \eta_2 \, V(1, 1) \hspace{2.5cm} (9)$$

alors que pour $(q, v, l) = (1, 2, 1)$ la matrice $(N^2 \times 1)$, $C_{2q,x}^{(v,l)}$ correspond à la version vectorisée de $C_{2,x}^{(1,1)}$ définie par:

$$C_{2,x}^{(2,1)} = \mathrm{E}[x(t) \otimes x(t)^{*}] = \sum_{p=1}^{P} c_{2,sp} \, a_p \otimes a_p^{*} + \eta_2 \, V(2, 1) \hspace{2cm} (10)$$

Enfin, pour $(q, v, l) = (1, 1, 0)$, $C_{2q,x}^{(v,l)}$ correspond au conjugué de $C_{2,x}^{(1,1)}$.

De même, à l'ordre 4, $q = 2$, et l'on considère $v$ tel que $2 \le v \le 4$, ce qui génère les paramètres $l$ avec $v - 2 \le l \le 2$. Pour $(q, v, l) = (2, 2, 1)$, la matrice $(N^2 \times N^2)$ $C_{2q,x}^{(v,l)}$ correspond à l'expression classique de la matrice de quadricovariance des données, définie par :

$$C_{4,x}^{(2,1)} = \sum_{p=1}^{P} c_{4,sp} \, [a_p \otimes a_p^{*}][a_p \otimes a_p^{*}]^{H} \hspace{3cm} (11)$$

alors que pour $(q, v, l) = (2, 2, 2)$, la matrice $(N^2 \times N^2)$ $C_{2q,x}^{(v,l)}$ correspond à une expression alternative de la matrice de quadricovariance de données définie par :

$$C_{4,x}^{(2,2)} = \sum_{p=1}^{P} c_{4,sp}\, [\boldsymbol{a}_p \otimes \boldsymbol{a}_p][\boldsymbol{a}_p \otimes \boldsymbol{a}_p]^{\mathrm{H}} \qquad (12)$$

Pour $(q, v, l) = (2, 2, 0)$, la $(N^2 \times N^2)$ matrice $C_{2q,x}^{(v,l)}$ correspond au conjugué de $C_{4,x}^{(2,2)}$.

Pour $(q, v, l) = (2, 3, 2)$, la $(N^3 \times N)$ matrice $C_{2q,x}^{(v,l)}$ est définie par :

$$C_{4,x}^{(3,2)} = \sum_{p=1}^{P} c_{4,sp}\, [\boldsymbol{a}_p \otimes \boldsymbol{a}_p \otimes \boldsymbol{a}_p{}^{*}]\, \boldsymbol{a}_p{}^{\mathrm{H}} \qquad (13)$$

alors que pour $(q, v, l) = (2, 3, 1)$, la $(N^3 \times N)$ matrice $C_{2q,x}^{(v,l)}$ correspond au conjugué de $C_{4,x}^{(3,2)}$. Finalement, pour $(q, v, l) = (2, 4, 2)$, la $(N^4 \times 1)$ matrice $C_{2q,x}^{(v,l)}$ correspond à la version vectorisée de $C_{4,x}^{(2,1)}$ ou $C_{4,x}^{(2,2)}$ définie par :

$$C_{4,x}^{(4,2)} = \sum_{p=1}^{P} c_{4,sp}\, [\boldsymbol{a}_p \otimes \boldsymbol{a}_p \otimes \boldsymbol{a}_p{}^{*} \otimes \boldsymbol{a}_p{}^{*}] \qquad (14)$$

Pour construire un algorithme de type MUSIC rectangulaire, quelques hypothèses sont posées ci-après.

Pour développer un algorithme MUSIC rectangulaire à l'ordre 2q, pour le rangement $C_{2q,x}^{(v,l)}$ introduit ci-dessus, on fait les hypothèses suivantes :

H1 $Pg < N$, $1 \le g \le G$,
H2 : les Matrices $A_g^{\otimes l} \otimes A_g^{*\otimes(v-l)}$ et $A_g^{\otimes(q-v+l)} \otimes A_g^{*\otimes(q-l)}$ ont un rang égal à $P_g^{\mathrm{Min}(v,2q-v)}$, $1 \le g \le G$,
H3 :

$$P(G, q, v) \triangleq \sum_{g=1}^{G} P_g^{\mathrm{Min}(v,\,2q-v)} < N^{\mathrm{Min}(v,\,2q-v)},$$

H4 :  les  matrices  $\overline{A}_{q,1}^{(v,l)} \triangleq [A_1^{\otimes l} \otimes A_1^{*\otimes(v-l)}, \ldots, A_G^{\otimes l} \otimes A_G^{*\otimes(v-l)}]$  et

$\overline{A}_{q,2}^{(v,l)} \triangleq [A_1^{\otimes(q-v+l)} \otimes A_1^{*\otimes(q-l)}, \ldots, A_G^{\otimes(q-v+l)} \otimes A_G^{*\otimes(q-l)}]$ ont un rang $P(G, q, v)$.

En particulier, pour des sources qui sont statistiquement dépendantes $(G = 1)$, $P(G, q, v) = P_g^{\mathrm{Min}(v,\,2q-v)}$, ce qui conduit à $P(G, q, v) = P^{2q-v}$ pour $v \ge q$, la matrice $A_1$ se réduit à $A$ et les hypothèses H1 à H4 se réduisent à :

H1' : $P < N$
H2' : les matrices $A^{\otimes l} \otimes A^{*\otimes(v-l)}$ et $A^{\otimes(q-v+l)} \otimes A^{*\otimes(q-l)}$ ont un rang égal à $P^{\mathrm{Min}(v,\,2q-v)}$, i.e. à $P^{2q-v}$ pour $v \ge q$.

Pour des sources indépendantes statistiquement $(G = P)$, $P(G, q, v) = P$, la matrice $A_g$ se réduit au vecteur $\boldsymbol{a}_g$ et les hypothèses H1 à H4 à :

H1" : $P < N^{\mathrm{Min}(v,\,2q-v)}$ i.e. $P < N^{2q-v}$ pour $v \ge q$.

H2" : les matrices $\overline{A}_{q,1}^{(v,l)} \triangleq [\boldsymbol{a}_{q,1,1}^{(v,l)}, \ldots, \boldsymbol{a}_{q,P,1}^{(v,l)}]$ et $\overline{A}_{q,2}^{(v,l)} \triangleq [\boldsymbol{a}_{q,1,2}^{(v,l)}, \ldots, \boldsymbol{a}_{q,P,2}^{(v,l)}]$ sont de rang plein.

Algorithme 2*q*-MUSIC rectangulaire

La matrice $C_{2q,s_g}^{(v,l)}$ a un rang plein, Min($P_g{}^v$, $P_g{}^{2q-v}$), i.e. $P^{2q-v}$ pour $v \geq q$, en général car les composantes de $s_g(t)$ sont dépendantes statistiquement. On déduit ensuite à partir de H1 à H4 que, pour $q > 1$, la matrice $C_{2q,x}^{(v,l)}$ a un rang égal à $P(G, q, v)$.

Pour construire un algorithme de type MUSIC à partir de la matrice, $C_{2q,x}^{(v,l)}$, pour $q > 1$, on détermine en premier la décomposition en valeurs singulières (SVD) de la matrice $C_{2q,x}^{(v,l)}$ donnée par :

$$C_{2q,x}^{(v,l)} = [U_{2q,s}^{(v,l)} \quad U_{2q,n}^{(v,l)}] \begin{bmatrix} \Sigma_{2q,s}^{(v,l)} & O_{2q,1}^{(v,l)} \\ O_{2q,2}^{(v,l)} & \Sigma_{2q,n}^{(v,l)} \end{bmatrix} \begin{bmatrix} V_{2q,s}^{(v,l)\,\mathrm{H}} \\ V_{2q,n}^{(v,l)\,\mathrm{H}} \end{bmatrix} \qquad (15)$$

où $\Sigma_{2q,s}^{(v,l)}$ est la matrice diagonale ($P(G, q, v)$ x $P(G, q, v)$) des valeurs singulières non nulles de $C_{2q,x}^{(v,l)}$, $U_{2q,s}^{(v,l)}$ et $V_{2q,s}^{(v,l)}$ telles que $U_{2q,s}^{(v,l)\mathrm{H}}U_{2q,s}^{(v,l)} = V_{2q,s}^{(v,l)\mathrm{H}}V_{2q,s}^{(v,l)} = \mathbf{I}$ sont les ($N^v$ x $P(G, q, v)$) et ($N^{2q-v}$ x $P(G, q, v)$) matrices unitaires des vecteurs singuliers à gauche et à droite de $C_{2q,x}^{(v,l)}$ associées respectivement aux $P(G, q, v)$ valeurs singulières non nulles, $O_{2q,1}^{(v,l)}$ et $O_{2q,2}^{(v,l)}$ sont les $(P(G, q, v)$ x $(N^{2q-v} - P(G, q, v)))$ et $((N^v - P(G, q, v))$ x $P(G, q, v))$ matrices nulles respectivement, $\Sigma_{2q,n}^{(v,l)}$ est la $((N^v - P(G, q, v))$ x $(N^{2q-v} - P(G, q, v)))$ matrice diagonale des valeurs singulières nulles de $C_{2q,x}^{(v,l)}$, $U_{2q,n}^{(v,l)}$ et $V_{2q,n}^{(v,l)}$, tel que $U_{2q,n}^{(v,l)\,\mathrm{H}}U_{2q,n}^{(v,l)} = \mathrm{I}$, $V_{2q,n}^{(v,l)\mathrm{H}}V_{2q,n}^{(v,l)} = \mathrm{I}$, $U_{2q,s}^{(v,l)\,\mathrm{H}}U_{2q,n}^{(v,l)} = O_{2q,2}^{(v,l)\,\mathrm{T}}$, $V_{2q,s}^{(v,l)\,\mathrm{H}}V_{2q,n}^{(v,l)} = O_{2q,1}^{(v,l)}$, sont les ($N^v$ x ($N^v-P(G, q, v)$)) et ($N^{2q-v}$ x ($N^{2q-v} - P(G, q, v)$)) matrices unitaires des vecteurs singuliers à gauche et à droite de $C_{2q,x}^{(v,l)}$ associées aux valeurs singulières nulles.

Comme l'espace engendré par les colonnes de $U_{2q,s}^{(v,l)}$, noté span $\{U_{2q,s}^{(v,l)}\}$, correspond à l'espace engendré par les colonnes de $\overline{A}_{q,1}^{(v,l)}$, noté span $\{\overline{A}_{q,1}^{(v,l)}\}$, on en déduit que toutes les colonnes de toutes les matrices $Ag^{\otimes}$ $\otimes Ag^{*\otimes(v-l)}$, $1 \leq g \leq G$ sont orthogonales à toutes les colonnes de $U_{2q,n}^{(v,l)}$. Soit $a_{ig}$ le vecteur directeur de la ième source du gième groupe. Le vecteur $a_{ig}^{\otimes l} \otimes a_{ig}^{*\otimes(v-l)}$ correspond à une colonne de $A_g^{\otimes l} \otimes A_g^{*\otimes(v-l)}$.

Tous les vecteurs $\{a_{ig}^{\otimes l} \otimes a_{ig}^{*\otimes(v-l)}, 1 \leq i \leq P_g, 1 \leq g \leq \mathrm{G}\}$ sont donc orthogonaux aux colonnes de $U_{2q,n}^{(v,l)}$ et sont solution de l'équation :

$$[a^{\otimes l} \otimes a^{*\otimes(v - l)}]^{\mathrm{H}} \, U_{2q,n}^{(v,l)} \, U_{2q,n}^{(v,l)\mathrm{H}} \, [a^{\otimes l} \otimes a^{*\otimes(v - l)}] = 0 \qquad (15\mathrm{bis})$$

Cette équation est à la base de l'algorithme MUSIC rectangulaire à l'ordre 2q pour le rangement $C_{2q,x}^{(v,l)}$, noté 2*q*-MUSIC(*v*,*l*).

Dans les situations pratiques, la matrice $U_{2q,n}^{(v,l)}$ sera estimée à partir des observations et la direction d'arrivée des sources peut être obtenue en recherchant les minima de la partie gauche de l'équation (15bis).

En résumé, les étapes de l'algorithme MUSIC rectangulaire à l'ordre 2q, pour le rangement $C_{2q,x}^{(v,l)}$, noté 2$q$-MUSIC($v,l$), sont les suivantes :

1 - estimation $\hat{C}_{2q,x}^{(v,l)}$ de la matrice $C_{2q,x}^{(v,l)}$ à partir de $K$ échantillons vectoriels $x(k)$, $1 \leq k \leq K$ en utilisant un estimateur des cumulants circulaires d'ordre 2q des observations,

2 - décomposition en valeurs singulières de la matrice estimée $\hat{C}_{2q,x}^{(v,l)}$ et extraction d'une estimée $\hat{U}_{2q,n}^{(v,l)}$ de la matrice $U_{2q,n}^{(v,l)}$. Cette étape peut impliquer la détermination du rang dans des cas où le nombre de sources et/ou leur dépendance mutuelle statistique ne sont pas connue a priori,

3 - calcul du pseudo-spectre estimé

$$\hat{P}_{2q\text{-}Music(v,\,l)}(\theta, \varphi) \overset{\Delta}{=}$$

$$[a(\theta, \varphi)^{\otimes l} \otimes a(\theta, \varphi)^{*\otimes(v-l)}]^{\mathrm{H}} \, \hat{U}_{2q,n}^{(v,l)} \, \hat{U}_{2q,n}^{(v,l)\,\mathrm{H}} \, [a(\theta, \varphi)^{\otimes l} \otimes a(\theta, \varphi)^{*\otimes(v-l)}] \quad (16)$$

pour un maillage judicieusement choisi et recherche des minima locaux (incluant l'interpolation autour des minima locaux du maillage).

Dans certains cas, le nombre de sources $P$ est connu, $P < N$, mais leur dépendance statistique n'est pas connue. Dans ces cas, $P(G, q, v) \leq P^{2q-v}$ pour $v \geq q$ et une manière de procéder est de faire l'hypothèse implicite que toutes les sources sont dépendantes statistiquement pour construire $\hat{U}_{2q,n}^{(v,l)}$, ce qui revient à faire l'hypothèse que $P(G, q, v) = P^{2q-v}$ pour $v \geq q$.

De la même manière que pour 2-MUSIC, l'algorithme 2q-MUSIC rectangulaire ne peut pas traiter des sources parfaitement cohérentes. En effet, dans ce cas une ou plusieurs matrices $C_{2q,sg}^{(v,l)}$ ont un rang inférieur à $P_g^{Min(v,\,2q-v)}$ et les sources correspondantes ne peuvent être estimées par l'algorithme.

Selon un mode de réalisation du procédé selon l'invention, on va chercher à réduire la complexité et augmenter la performance, des exemples de rangement rectangulaire non redondant vont être donnés.

Une manière de procéder consiste notamment à éliminer dans certains cas, la redondance dans le rangement rectangulaire $C_{2q,x}^{(v,l)}$. Deux façons d'enlever cette redondance vont être présentées pour des valeurs données de $q$, $v$ et $l$. On utilisera la notation NR-2$q$-MUSIC($v$, $l$) pour les algorithmes 2q-MUSIC rectangulaires non redondants à l'ordre 2q. Rangement rectangulaire non redondant pour des statistiques à l'ordre 2q

Pour des valeurs données de $q$, $v$ et $l$, le rangement rectangulaire $C_{2q,x}^{(v,l)}$ contient des redondances résultant des propriétés de symétrie de cumulants, ces éléments n'apportant aucune information utile.

Pour des sources statistiquement indépendantes, $p$ ($1 \leq p \leq P$), la redondance génère des vecteurs directeurs virtuels gauche et droite $a_{q,p,1}^{(v,l)}$ et $a_{q,p,2}^{(v,l)}$ redondants, c'est-à-dire des vecteurs ayant des composantes qui correspondent à la même fonction de ($\theta_p$, $\varphi_p$). De manière équivalente, cela génère des réseaux virtuels et des capteurs virtuels gauches et droits d'ordre 2q redondants, c'est-à-dire dont certains éléments coïncident. Si M capteurs virtuels d'un réseau virtuel coïncident, on dit que le capteur virtuel a l'ordre de multiplicité M. Un tel capteur est pondéré en amplitude par un facteur M et le réseau virtuel associé est donc pondéré ou fenêtré en amplitude. Il est bien connu que le fenêtrage en amplitude augmente la largeur de lobe à 3 dB du réseau formé, ce qui génère une perte en ouverture effective ou en résolution. En outre, en gardant cette redondance, la taille des vecteurs directeurs virtuels est augmentée artificiellement sans ajout d'information. Dans ce contexte, une manière de diminuer la complexité et d'augmenter la résolution de 2q-MUSIC($v$, $l$) est d'enlever le fenêtrage en amplitude des réseaux virtuels gauche et droit, ce qui revient à imposer un ordre de multiplicité de un à chaque capteur virtuel gauche et droit. Cette opération de suppression de la redondance générera des vecteurs directeurs virtuels gauche et droit non redondants ainsi que des réseaux virtuels gauche et droit non redondants, aboutissant à la construction de rangements non redondants, aussi exploitables pour des sources corrélées.

Pour éliminer la redondance dans le rangement rectangulaire $C_{2q,x}^{(v,l)}$, on introduit des matrices de réduction gauche et droite associées, pour des sources indépendantes statistiquement, aux vecteurs directeurs gauche et droite $a_{q,p,1}^{(v,l)}$ et $a_{q,p,2}^{(v,l)}$. Ces matrices de réduction gauche et droite transforment tous les éléments redondants des vecteurs directeurs virtuels en un seul élément d'un nouveau vecteur directeur virtuel non redondant. Ainsi, les matrices de réduction $(N_{2q,1}^{(v,l)} \times N^v)$ gauche et $(N_{2q,2}^{(v,l)} \times N^{2q-v})$ droite, notées respectivement $Z_{q,1}^{(v,l)}$ et $Z_{q,2}^{(v,l)}$, sont telles que les vecteurs $a_{q,p,1,nr}^{(v,l)}$ et $a_{q,p,2,nr}^{(v,l)}$, définis par :

$$a_{q,p,1,nr}^{(v,l)} \triangleq Z_{q,1}^{(v,l)} \, a_{q,p,1}^{(v,l)} \qquad (21a)$$

$$a_{q,p,2,nr}^{(v,l)} \triangleq Z_{q,2}^{(v,l)} \, a_{q,p,2}^{(v,l)} \qquad (21b)$$

correspondent aux vecteurs directeurs virtuels $(N_{2q,1}^{(v,l)} \times 1)$ gauche et $(N_{2q,2}^{(v,l)} \times 1)$ droite non redondants associés aux réseaux virtuels gauche et droit non redondants ayant respectivement $N_{2q,1}^{(v,l)}$ et $N_{2q,2}^{(v,l)}$ capteurs virtuels de multiplicité un.

Les matrices de réduction $Z_{q,1}^{(v,l)}$ et $Z_{q,2}^{(v,l)}$ dont les éléments sont respectivement notés $Z_{q,1}^{(v,l)}(i, j)$ et $Z_{q,2}^{(v,l)}(k, m)$, doivent avoir les propriétés suivantes:

P1 : $Z_{q,1}^{(v,l)}$ et $Z_{q,2}^{(v,l)}$ sont des matrices $(N_{2q,1}^{(v,l)} \times N^v)$ et $(N_{2q,2}^{(v,l)} \times N^{2q-v})$ à valeurs réelles,

P2 :

$$\sum_{j=1}^{N^v} Z_{q,1}^{(v,l)}(i,j) = \sum_{j=1}^{N^{2q-v}} Z_{q,2}^{(v,l)}(k,j) = 1; \; 1 \leq i \leq N_{2q,1}^{(v,l)}, 1 \leq k \leq N_{2q,2}^{(v,l)},$$

P3a : pour $1 \leq j \leq N^v$ tel que $a_{q,p,1}^{(v,l)}(j)$, l'élément $j$ de $a_{q,p,1}^{(v,l)}$, est associé à un capteur virtuel de multiplicité 1, $\exists$ $i_0, 1 \leq i_0 \leq N_{2q,1}^{(v,l)}$, tel que $Z_{q,1}^{(v,l)}(i_0, j) = 1$ et $Z_{q,1}^{(v,l)}(i, j) = 0$ for $i \neq i_0$

P3b : pour $1 \leq j \leq N^{2q-v}$ tel que $a_{q,p,2}^{(v,l)}(j)$ (j) est associé à un capteur virtuel de multiplicité 1, $\exists i_0, 1 \leq i_0 \leq N_{2q,2}^{(v,l)}$, tel que $Z_{q,2}^{(v,l)}(i_0, j) = 1$ et $Z_{q,2}^{(v,l)}(i, j) = 0$ for $i \neq i_0$

P4a : Pour $1 \leq jk \leq N^v$, $1 \leq k \leq M$, tel que $a_{q,p,1}^{(v,l)}(j_k)$, $1 \leq k \leq M$, sont associés au même capteur virtuel de multiplicité $M > 1$, $\exists i_0, 1 \leq i_0 \leq N_{2q,1}^{(v,l)}$, tel que $Z_{q,1}^{(v,l)}(i_0, j_m) = 0$ pour $1 \leq j_m \leq N^v$ et $m \notin \{1, 2...,M\}$ et $Z_{q,1}^{(v,l)}(i, j_k) = 0$ pour $i \neq i_0$ et $1 \leq k \leq M$.

P4b : Pour $1 \leq jk \leq N^{2q-v}$, $1 \leq k \leq M$, tel que $a_{q,p,2}^{(v,l)}(j_k)$, $1 \leq k \leq M$, sont associés au même capteur virtuel de multiplicité $M > 1$, $\exists i_0, 1 \leq i_0 \leq N_{2q,2}^{(v,l)}$, tel que $Z_{q,2}^{(v,l)}(i_0, j_m) = 0$ pour $1 \leq j_m \leq N^{2q-v}$ et $m \notin \{1, 2...,M\}$ et $Z_{q,2}^{(v,l)}(i, j_k) = 0$ pour $i \neq i_0$ et $1 \leq k \leq M$.

Les propriétés P2 et P3a, P3b assurent que les capteurs virtuels de multiplicité 1 sont conservés avec leur ordre de multiplicité 1 dans le réseau virtuel non redondant associé. Les propriétés P2 et P4a, P4b assurent que des capteurs virtuels avec des positions identiques sont combinés entre eux pour générer le même capteur virtuel mais avec une multiplicité de 1 dans le réseau virtuel non redondant. En outre, les propriétés P1 et P4a, P4b garantissent que $Z_{q,1}^{(v,l)}$ et $Z_{q,2}^{(v,l)}$ ont des rangs pleins égaux respectivement à $N_{2q,1}^{(v,l)}$ et $N_{2q,2}^{(v,l)}$.

En pratique, $a_{q,p,1}^{(v,l)}$ et $a_{q,p,2}^{(v,l)}$ ne sont pas disponibles et les matrices de réduction $Z_{q,1}^{(v,l)}$ et $Z_{q,2}^{(v,l)}$ doivent être appliquées à $C_{2q,x}^{(v,l)}$. Cela génère des rangements rectangulaires ($N_{2q,1}^{(v,l)}$ x $N_{2q,2}^{(v,l)}$) non redondants des cumulants d'ordre 2q des données, exploitables pour des sources aussi bien dépendantes qu'indépendantes statistiquement, et définis par :

$$C_{2q,x,nr}^{(v,l)} \triangleq Z_{q,1}^{(v,l)} \, C_{2q,x}^{(v,l)} \, Z_{q,2}^{(v,l)\,\mathrm{H}} \qquad (22)$$

Utilisant (5), (21) et (22), nous obtenons finalement

$$C_{2q,x,nr}^{(v,l)} = \sum_{g=1}^{G} Z_{q,1}^{(v,l)} \, [A_g^{\otimes l} \otimes A_g^{*\otimes(v-l)}] \, C_{2q,sg}^{(v,l)}$$

$$[\, A_g^{\otimes(q-v+l)} \otimes A_g^{*\otimes(q-l)}]^{\mathrm{H}} \, Z_{q,2}^{(v,l)\,\mathrm{H}} + \eta_2 \, Z_{1,1}^{(v,l)} \, V(v,l) \, Z_{1,2}^{(v,l)\,\mathrm{H}} \, \delta(q-1) \quad (23)$$

Pour des sources statistiquement indépendantes, utilisant (7) et (21), (23) se réduit à :

$$C_{2q,x,nr}^{(v,l)} = \sum_{p=1}^{P} c_{2q,sp} \, a_{q,p,1,nr}^{(v,l)} \, a_{q,p,2,nr}^{(v,l)\,\mathrm{H}} + \eta_2 \, Z_{1,1}^{(v,l)} \, V(v,l) \, Z_{1,2}^{(v,l)\,\mathrm{H}} \, \delta(q-1) \qquad (24)$$

Dans la suite de la description, on considère deux stratégies pour éliminer la redondance du rangement rectangulaire $C_{2q,x}^{(v,l)}$, ce qui conduit à deux familles de matrice de réduction $Z_{q,1}^{(v,l)}$ et $Z_{q,2}^{(v,l)}$.

Pour construire la matrice de réduction, on fait l'hypothèse que les sources sont statistiquement indépendantes, puis on applique cette matrice quelque soit la corrélation des sources.

Dans ce cas pour les réseaux virtuels gauche et droite associés à $C_{2q,x}^{(v,l)}$, la stratégie de sélection consiste à conserver uniquement un capteur virtuel parmi les groupes de capteurs qui coïncident. Cette stratégie est optimale en terme de réduction de complexité et asymptotiquement optimale (pour un grand nombre d'échantillons vectoriels) en absence d'erreurs de modèle, en terme de performance.

Pour illustrer cette stratégie, on considère ($q, v, l$) = (2, 2, 1) et on fait l'hypothèse que le réseau antennaire est un réseau circulaire uniforme avec N=3 capteurs omnidirectionnels.

Dans ce cas, les (9 x 1) vecteurs directeurs virtuels gauche et droit associés à $C_{2q,x}^{(v,l)}$ coïncident et sont donnés par :

$$a_{2,p,1}^{(2,1)} = a_{2,p,2}^{(2,1)} \triangleq a_p \otimes a_p^{*} \qquad (25)$$

$$\triangleq [1, \, a_p(1)\,a_p(2)^{*}, \, a_p(1)\,a_p(3)^{*}, \, a_p(2)\,a_p(1)^{*}, \, 1, \, a_p(2)\,a_p(3)^{*}, \, a_p(3)\,a_p(1)^{*},$$

$$a_p(3)\,a_p(2)^{*}, \, 1]^{\mathrm{T}}$$

où $\alpha_p(j)$ est l'élément $j$ de $\boldsymbol{a}_p$.

Le nombre de composantes différentes de $\boldsymbol{a}_{2,p,1}^{(2,1)}$, qui correspond aussi au nombre de capteurs virtuels différents du réseau virtuel associé, est égal à [4], $N_{4,1}^{(2,1)} = N^2 - N + 1 = 7$, alors que deux composantes, la 5ième et la 9ième, correspondent à la première et n'apportent aucune information, ce qui signifie que les capteurs virtuels associés coïncident.

Les (7 x 9) matrices de réduction $Z_{2,1}^{(2,1)}$ et $Z_{2,2}^{(2,1)}$ pour la stratégie choisie, notées respectivement $Z_{2,1}^{(2,1)},S$ et $Z_{2,2}^{(2,1)},S$ coïncident et sont définies par :

$$Z_{2,1}^{(2,1)},S = Z_{2,2}^{(2,1)},S = \begin{pmatrix} 1 & 0 & 0 & 0 & 0 & 0 & 0 & 0 & 0 \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \end{pmatrix} \quad (26)$$

La stratégie de moyennage pour éliminer la redondance de $C_{2q,x}^{(v,l)}$ est une alternative qui est aussi construite en faisant l'hypothèse de sources indépendantes statistiquement, puis appliquée quelle que soit la corrélation des sources.

Cette stratégie consiste, pour les réseaux virtuels gauche et droite associés à $C_{2q,x}^{(v,l)}$ à moyenner les compo-santes du vecteur directeur virtuel associé à un même capteur virtuel du réseau virtuel associé.

En termes de performances et en absence d'erreurs de modèle, cette stratégie est asymptotiquement optimale et est meilleure que la stratégie de sélection à cause de l'opération de moyennage du bruit dans les composantes associées du vecteur observation.

En outre, cette stratégie est en général plus performante que la sélection en présence d'erreurs de modèle à cause d'un moyennage de ces dernières dans les composantes associées du vecteur observation. D'un point de vue complexité, la stratégie de moyennage est moins performante que la stratégie de sélection car le calcul de $C_{2q,x,nr}^{(v,l)}$ requiert le calcul de tous les éléments de $C_{2q,x}^{(v,l)}$ contrairement à la sélection. Considérant l'exemple de la section précédente, les matrices de réduction (7 x 9) $Z_{2,1}^{(2,1)}$ et $Z_{2,2}^{(2,1)}$ pour la stratégie de moyennage, notées respectivement $Z_{2,1}^{(2,1)},A$ et $Z_{2,2}^{(2,1)},A$, coïncident et sont définies par :

$$Z_{2,1}^{(2,1)},A = Z_{2,2}^{(2,1)},A = \begin{pmatrix} \frac{1}{3} & 0 & 0 & 0 & \frac{1}{3} & 0 & 0 & 0 & \frac{1}{3} \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \end{pmatrix} \quad (27)$$

Pour construire les algorithmes 2q-MUSIC rectangulaires non redondants pour le rangement $C_{2q,x,nr}^{(v,l)}$, on fait toujours les hypothèses précitées. Les propriétés P1 à P4b assurent alors qu'en absence de bruit, $C_{2q,x,nr}^{(v,l)}$ et

$C_{2q,x}^{(v,l)}$ ont le même rang égal à $P(G, q, v)$. Les rangs des espaces signal et bruit de $C_{2q,x,nr}^{(v,l)}$ sont donc identiques à ceux de $C_{2q,x}^{(v,l)}$ mais l'espace signal de $C_{2q,x,nr}^{(v,l)}$ est maintenant engendré par la matrice réduite $\overline{A}_{q,1,nr}^{(v,l)} = Z_{q,1}^{(v,l)} \overline{A}_{q,1}^{(v,l)}$. Après calcul de la SVD de $C_{2q,x,nr}^{(v,l)}$ en appliquant un raisonnement identique à celui présenté pour l'algorithme rectangulaire MUSIC-2q, les différentes étapes de l'algorithme 2q-MUSIC rectangulaire non redondant pour le rangement $C_{2q,x,nr}^{(v,l)}$, ou NR-2q-MUSIC($v$, $l$), sont résumées ci-après :

1. estimation, $\hat{C}_{2q,x,nr}^{(v,l)}$, de la matrice $C_{2q,x,nr}^{(v,l)}$ à partir de $K$ échantillons vectoriels $\boldsymbol{x}(k)$, $1 \leq k \leq K$, en utilisant un estimateur adéquat des cumulants d'ordre 2q des observations :

2. SVD de $\hat{C}_{2q,x,nr}^{(v,l)}$ et estimation d'une base orthonormale de l'espace bruit, $\hat{U}_{2q,n,nr}^{(v,l)}$. Cette étape peut nécessiter une estimation de rang dans le cas où le nombre de sources et/ou leur corrélation mutuelle n'est pas connue 3. calcul, à partir de (21 a), du pseudo-spectre estimé :

$$\hat{P}_{\text{NR-}2q\text{-Music}(v, l)}(\theta, \varphi) \triangleq \boldsymbol{a}_{q,p,1,nr}^{(v,l)\,\text{H}} \hat{U}_{2q,n,nr}^{(v,l)} \hat{U}_{2q,n,nr}^{(v,l)\,\text{H}} \boldsymbol{a}_{q,p,1,nr}^{(v,l)} \qquad (28)$$

pour un maillage bien choisi et recherche des minimas locaux (incluant de l'interpolation autour de chaque mimimum).

Comme les propriétés P1 à P4a, P4b assurent que les espaces signal de $C_{2q,x,nr}^{(v,l)}$ et $C_{2q,x}^{(v,l)}$ ont le même rang, égal à $P(G, q, v)$, le nombre maximal de sources qui peut être traité par NR-2q-MUSIC($v$, $l$) est égal à $\text{Min}(N_{2q,1}^{(v,l)}, N_{2q,2}^{(v,l)}) - 1$.

Le procédé décrit ci-dessus s'applique par exemple pour les systèmes comprenant un nombre de sources important, que l'on cherche à caractériser.

Il permet de diminuer la taille des réseaux de capteurs d'un système, tout en conservant de bonnes performances. Ceci conduit à un gain en encombrement et en coût. Il peut être mis en oeuvre dans un système positionné sur un drône.

Le procédé peut être utilisé dans les applications suivantes :

- le traitement des environnements denses en émetteurs à partir de peu de capteurs,
- la création d'ouvertures virtuelles aussi grandes que désirées à partir d'un réseau arbitraire,
- la création d'un nombre de capteurs virtuels aussi grand que désiré à partir d'un réseau arbitraire,
- l'augmentation quasi sans limite de la robustesse aux erreurs de modèles (calibration, tarage...) et du pouvoir séparateur à partir d'un réseau arbitraire,
- la diminution du nombre de capteurs des réseaux à performances constantes,
- l'optimisation du compromis performance, nombre de sources à traiter, complexité en jouant sur le rangement des statistiques.

Le procédé selon l'invention permet d'atteindre de bonnes performances en termes de précision d'estimation, de résolution angulaire, de robustesse aux erreurs de modèles et de nombres de sources pouvant être traitées.

Références

[1] P. CHEVALIER, A. FERREOL, L. ALBERA, "High resolution direction finding from higher order statistics : the 2q-MUSIC algorithm", IEEE Trans. Signal Processing, Vol 54, N°8, pp. 2986-2997, Aug. 2006

[2] P. CHEVALIER, L. ALBERA, A. FERREOL, P. COMON, "On the Virtual Array concept for higher order array processing", IEEE Trans. Signal Processing , Vol 53, N°4, pp. 1254-1271, April 2005.

[3] P. PAL, P.P. VAIDYANATHAN, "Multiple Level Nested Array: An Efficient Geometry for 2qth-Order Cumulant Based Array Processing ", IEEE Trans. Signal Processing, Vol 60, N°3, pp. 1253-1269, March 2012.

[4] P. PAL, P.P. VAIDYANATHAN, "Nested Arrays: A Novel approach to array processing with enhanced degrees of freedom", IEEE Trans. Signal Processing, Vol 58, N°8, pp. 4167-4181, Aug. 2010.

[5] A. FERREOL, P. CHEVALIER, "On the behavior of current second and higher order blind source séparation methods for cyclostationary sources", IEEE Trans. Signal Processing, Vol 48, N° 6, pp. 1712-1725, June 2000. Errata Vol 50, N°4, p 990, April 2002,

[6] P. Mc CULLAGH, "Tensor methods in Statistics", Chapman and Hall, Monographs on Statistics and applied Probability, 1987.

**Revendications**

1. Procédé d'estimation des directions d'arrivée de sources d'incidence sur un réseau comprenant N antennes (21i) à bande étroite recevant chacune la contribution de P sources, les observations reçues sur chaque antenne engendrant des statistiques pouvant se mettre sous la forme de matrice de cumulants d'ordre 2q, avec q>1, dont les coefficients sont les cumulants circulaires d'ordre 2q, $\text{Cum}[x_{i_1}(t),..., x_{i_q}(t), x_{i_{q+1}}(t)^*, ..., x_{i_{2q}}(t)^*]$ **caractérisé en ce qu'**il comporte au moins les étapes suivantes:

   - on range les statistiques d'ordre 2q des observations afin d'obtenir une matrice $C_{2q,x}^{(v,l)}$ rectangulaire d'ordre 2q de dimension ($N^v$ x $N^{2q-v}$), dont les coefficients sont les cumulants circulaires d'ordre 2q des observations, le rangement étant réalisé de la manière suivante :

   on décompose un 2q-uplet, ($i_1$,.., $i_q$, $i_{q+1}$,.., $i_{2q}$), d'indices $i_j$ ($1 \leq j \leq 2q$) ($1 \leq i_j \leq N$), en un v-uplet et un ($2q$-v)-uplet, indexés respectivement par v et l, et définis respectivement par ($i_1$, $i_2$,...., $i_l$, $i_{q+1}$,...., $i_{q+v-l}$) et ($i_{q+v-l+1}$,..., $i_{2q}$, $i_{l+1}$,...., $i_q$), où les $N^v$ valeurs du v-uplet et les $N^{2q-v}$ valeurs du ($2_{q-v}$)-uplet sont notées par des entiers $I_{v,l}$ et $J_{v,l}$, tels que $1 \leq I_{v,l} \leq N^v$ et $1 \leq I_{v,l} \leq N^{2q-v}$,

$$I_{v,l} \triangleq \sum_{j=1}^{l} N^{v-j}(i_j - 1) + \sum_{j=1}^{v-l} N^{v-l-j}(i_{q+j} - 1) + 1$$

$$J_{v,l} \triangleq \sum_{j=1}^{q-v+l} N^{2q-v-j}(i_{q+v-l+j} - 1) + \sum_{j=1}^{q-l} N^{q-l-j}(i_{l+j} - 1) + 1$$

   - on utilise une propriété d'invariance par permutation des cumulants et on déduit que :

$$\text{Cum}[x_{i_1}(t),..., x_{i_q}(t), x_{i_{q+1}}(t)^*, ..., x_{i_{2q}}(t)^*] = \text{Cum}[x_{i_1}(t),..., x_{i_l}(t), x_{i_{q+1}}(t)^*, ...,$$

$$x_{i_{q+v-l}}(t)^*, x_{i_{q+v-l+1}}(t)^*,..., x_{i_{2q}}(t)^*, x_{i_{l+1}}(t),.., x_{i_q}(t)],$$

   - on considère alors que le cumulant précédent est l'élément [$I_{v,l}$, $J_{v,l}$] de la matrice rectangulaire des cumulants,
   - on estime les valeurs des directions en utilisant un algorithme de goniométrie appliqué à la matrice rectangulaire estimée.

2. Procédé selon la revendication 1 **caractérisé en ce que** l'on définit un algorithme music en exécutant les étapes suivantes :

   2.1) estimer, $\hat{C}_{2q,x}^{(v,l)}$, de la matrice $C_{2q,x}^{(v,l)}$ pour K échantillons vectoriels $x(k)$, $1 \leq k \leq K$, en utilisant un estimateur de cumulants d'ordre 2q des observations 2.2) une décomposition singulière de la matrice $\hat{C}_{2q,x}^{(v,l)}$ et une extraction d'une estimée $\hat{U}_{2q,b}^{(v,l)}$, de la matrice unitaire $U_{2q,b}^{(v,l)}$ des vecteurs propres de $C_{2q,x}^{(v,l)}$,

   2.3) un calcul du pseudo-spectre estimé en appliquant la formule suivante et une recherche des directions associées aux minima locaux de cette fonction

$$\hat{P}_{2q\text{-}Music(v,\,l)}(\theta,\,\varphi) \;\triangleq\;$$

$$[a(\theta,\,\varphi)^{\otimes l} \;\otimes\; a(\theta,\,\varphi)^{*\otimes(v-l)}]^{\mathrm{H}} \; \hat{U}_{2q,n}^{(v,l)} \; \hat{U}_{2q,n}^{(v,l)\;\mathrm{H}} \; [a(\theta,\,\varphi)^{\otimes l} \otimes a(\theta,\,\varphi)^{*\otimes(v-l)}]$$

où Music correspondant à la fonction MUSIC,

$\otimes$ est le produit de Kronecker

$a(\theta,\,\varphi)$. est le vecteur directeur d'une source, $\theta$, angle d'azimut, $\varphi$ angle d'élévation,

$a(\theta,\,\varphi)^{\otimes l} = a(\theta,\,\varphi)\otimes a(\theta,\,\varphi)\otimes...\otimes a(\theta,\,\varphi)$ avec un nombre de produits de Kronecker égal à $l$-1

q ordre choisi, l indice de rangement.

**3.** Procédé selon l'une des revendications précédentes **caractérisé en ce qu'**il comporte une étape dans laquelle on élimine la redondance due à la symétrie des cumulants.

**4.** Procédé selon la revendication 3 **caractérisé en ce qu'**il comporte une étape où on élimine la redondance résultant des vecteurs directeurs virtuels ayant des composantes avec la même fonction en définissant une matrice de réduction droite $Z_{q,2}^{(v,l)}$ et une matrice de réduction gauche $Z_{q,1}^{(v,l)}$ et on obtient comme matrice rectangulaire de cumulants des observations :

$$C_{2q,x,nr}^{(v,l)} \;\triangleq\; Z_{q,1}^{(v,l)} \; C_{2q,x}^{(v,l)} \; Z_{q,2}^{(v,l)\;\mathrm{H}}$$

ce qui donne

$$C_{2q,x,nr}^{(v,l)} = \sum_{g=1}^{G} Z_{q,1}^{(v,l)} [A_g^{\otimes l} \otimes A_g^{*\otimes(v-l)}] \, C_{2q,s_g}^{(v,l)} \, [A_g^{\otimes(q-v+l)} \otimes A_g^{*\otimes(q-l)}]^{\mathrm{H}} \, Z_{q,2}^{(v,l)\;\mathrm{H}}$$

$$+ \, \eta_2 \, Z_{1,1}^{(v,l)} \, V(v,\,l) \, Z_{1,2}^{(v,l)\;\mathrm{H}} \, \delta(q-1)$$

avec

$\otimes$ est le produit de Kronecker

$Ag^{\otimes l}$ est la ($N^l$ x $P_g^l$) matrice définie par $A_g^{\otimes l} = A_g \otimes A_g \otimes...\otimes A_g$ avec un nombre de produits de Kronecker égal à $l$-1,

G le nombre de groupes de sources,

H le transposé et conjugué,

$\eta_2$ est la puissance moyenne du bruit par capteur,

$\delta(.)$ est le symbole de Kronecker.

**5.** Procédé selon la revendication 4 **caractérisé en ce que** la matrice est utilisée pour des sources arbitraires statistiquement indépendantes.

**6.** Procédé selon la revendication 4 **caractérisé en ce que** la matrice est utilisée pour des sources arbitraires statistiquement dépendantes.

**7.** Procédé selon la revendication 4 **caractérisé en ce qu'**il conserve uniquement un capteur virtuel parmi chaque groupe de capteurs virtuels coïncidant.

**8.** Procédé selon la revendication 4 **caractérisé en ce que** qu'il moyenne les capteurs virtuels associés à un même groupe de capteurs virtuels coïncidant.

**9.** Procédé selon l'une des revendications 3 à 8 **caractérisé en ce qu'**il comporte au moins les étapes suivantes pour la goniométrie des sources:

9.1) estimation $\hat{C}_{2q,x,nr}^{(v,l)}$, de la matrice $C_{2q,x,nr}^{(v,l)}$ à partir de K observations $\boldsymbol{x}(k)$, $1 \le k \le K$, en utilisant un estimateur à l'ordre 2q,

9.2) SVD de la matrice estimée $\hat{C}_{2q,x,nr}^{(v,l)}$ et estimation d'une base orthonormée de l'espace bruit $\hat{U}_{2q,n,nr}^{(v,l)}$,

9.3) détermination à partir des vecteurs directeurs virtuels associés à la matrice rectangulaire $C_{2q,x,nr}^{(v,l)}$, $\boldsymbol{a}_{q,p,1,nr}^{(v,l)} \triangleq Z_{q,1}^{(v,l)} \, \boldsymbol{a}_{q,p,1}^{(v,l)}$, du pseudo-spectre suivant et recherche des directions engendrant des minimas locaux

$$\hat{P}_{\text{NR-2q-Music}(v,\, l)}(\theta,\, \varphi) \triangleq \boldsymbol{a}_{q,p,1,nr}^{(v,l)}{}^{\text{H}} \, \hat{U}_{2q,n,nr}^{(v,l)} \, \hat{U}_{2q,n,nr}^{(v,l)}{}^{\text{H}} \, \boldsymbol{a}_{q,p,1,nr}^{(v,l)} \quad .$$

**10.** Dispositif d'estimation des directions d'arrivée de sources d'incidence sur un réseau comprenant N antennes (21i) à bande étroite recevant chacune la contribution de P sources, les observations reçues sur chaque antenne **caractérisé en ce qu'**il comporte un moyen de traitement (23, 25) adapté à mettre exécuter les étapes du procédé selon l'une des revendications 1 à 9.

## Patentansprüche

**1.** Verfahren zum Schätzen von Ankunftsrichtungen von Einfallsquellen auf einem Netzwerk, das N Schmalbandantennen (21i) umfasst, die jeweils den Beitrag von P Quellen empfangen, wobei die an jeder Antenne empfangenen Beobachtungen Statistiken erzeugen, die in Form einer Matrix von Kumulanten der Ordnung 2q vorliegen können, wobei q>1 ist, deren Koeffizienten die kreisförmigen Kumulanten der Ordnung 2q, Cum[$x_{i_1}(t)$,..., $x_{i_q}(t)$, $x_{i_{q+1}}(t)^*$,..., $x_{i_{2q}}(t)^*$] sind, **dadurch gekennzeichnet, dass** es wenigstens die folgenden Schritte beinhaltet:

- Einordnen der Statistiken der Ordnung 2q der Beobachtungen, um eine rechteckige Matrix $C_{2q,x}^{(v,l)}$ der Ordnung 2q der Größe ($N^V$ x $N^{2q-v}$) zu erhalten, deren Koeffizienten die kreisförmigen Kumulanten der Ordnung 2q der Beobachtungen sind,
wobei das Einordnen wie folgt durchgeführt wird:

Zerlegen eines 2q-Tupels, ($i_1,...i_q$, $i_{q+1},...$, $i_{2q}$), von Indexen $i_j$ ($1 \le j \le 2q$) ($1 \le i_j \le N$), in ein v-Tupel und ein (2q-v)-Tupel, jeweils indiziert mit $v$ und $l$, und jeweils definiert durch ($i_1, i_2,..., i_l, i_{q+1},..., i_{q+v-l}$) und ($i_{q+v-l+1},...,i_{2q}$, $i_{l+1},...,i_q$), wobei die $N^V$ Werte des v-Tupels und die $N^{2q-v}$ Werte des (2q-v)-Tupels durch ganze Zahlen $I_{v,l}$ und $J_{v,l}$ notiert werden, so dass $1 \le I_{v,l} \le N^v$ und $1 \le J_{v,l} \le N^{2q-v}$,

$$I_{v,l} \triangleq \sum_{j=1}^{l} N^{v-j} (i_j - 1) + \sum_{j=1}^{v-l} N^{v-l-j} (i_{q+j} - 1) + 1$$

$$J_{v,l} \triangleq \sum_{j=1}^{q-v+l} N^{2q-v-j} (i_{q+v-l+j} - 1) + \sum_{j=1}^{q-l} N^{q-l-j} (i_{l+j} - 1) + 1$$

- Benutzen einer Invarianzeigenschaft durch Permutieren von Kumulanten und Ableiten davon, dass:

$$\text{Cum}[x_{i_1}(t),..., x_{i_q}(t), x_{i_{q+1}}(t)^*, ..., x_{i_{2q}}(t)^*] = \text{Cum}[x_{i_1}(t),..., x_{i_l}(t), x_{i_{q+1}}(t)^*, ...,$$
$$x_{i_{q+v-l}}(t)^*, x_{i_{q+v-l+1}}(t)^*,..., x_{i_{2q}}(t)^*, x_{i_{l+1}}(t),..., x_{i_q}(t)],$$

- dann Ansehen des vorherigen Kumulanten als das Element [$I_{v,l}$, $J_{v,l}$] der rechteckigen Matrix von Kumulanten;
- Schätzen der Werte der Richtungen mit Hilfe eines auf die geschätzte rechteckige Matrix angewandten Goniometrie-Algorithmus.

2. Verfahren nach Anspruch 1, **dadurch gekennzeichnet, dass** ein Musikalgorithmus durch Ausführen der folgenden Schritte definiert wird:

2.1) Schätzen von $\hat{C}_{2q,x}^{(v,l)}$ der Matrix $C_{2q,x}^{(v,l)}$ für $K$ Vektor-Samples $x(k)$, $1 \leq k \leq K$, mit Hilfe eines Schätzglieds von Kumulanten der Ordnung 2q von Beobachtungen;

2.2) singulares Zerlegen der Matrix $\hat{C}_{2q,x}^{(v,l)}$ und Extrahieren einer Schätzung $\hat{U}_{2q,h}^{(v,l)}$ der unitären Matrix $U_{2q,h}^{(v,l)}$ der Eigenvektoren von $C_{2q,x}^{(v,l)}$;

2.3) Berechnen des geschätzten Pseudospektrums durch Anwenden der folgenden Formel und Suchen nach Richtungen, die mit den lokalen Minima dieser Funktion assoziiert sind:

$$\hat{P}_{2q\text{-}Music(v,\,l)}(\theta, \varphi) \triangleq$$

$$[a(\theta, \varphi)^{\otimes l} \otimes a(\theta, \varphi)^{*\otimes(v-l)}]^{\mathrm{H}} \hat{U}_{2q,n}^{(v,l)} \hat{U}_{2q,n}^{(v,l)\,\mathrm{H}} [a(\theta, \varphi)^{\otimes l} \otimes a(\theta, \varphi)^{*\otimes(v-l)}]$$

wobei Music der MUSIC Funktion entspricht,
$\otimes$ das Kronecker-Produkt ist,
$a(\theta, \varphi)$. der Richtungsvektor einer Quelle ist, $\theta$ der Azimutwinkel ist, $\varphi$ der Höhenwinkel ist,
$a(\theta, \varphi)^{\otimes l} = a(\theta, \varphi) \otimes a(\theta, \varphi) \otimes \dots \otimes a(\theta, \varphi)$ mit einer Anzahl $l$ - 1 an Kronecker-Produkten,
q die gewählte Ordnung ist, I der Einordnungsindex ist.

3. Verfahren nach einem der vorherigen Ansprüche, **dadurch gekennzeichnet, dass** es einen Schritt beinhaltet, in dem die Redundanz aufgrund der Symmetrie der Kumulanten eliminiert wird.

4. Verfahren nach Anspruch 3, **dadurch gekennzeichnet, dass** es einen Schritt beinhaltet, in dem die Redundanz eliminiert wird, die daraus resultiert, dass die virtuellen Richtungsvektoren Komponenten mit derselben Funktion haben, durch Definieren einer rechten Reduktionsmatrix $Z_{q,2}^{(v,l)}$ und einer linken Reduktionsmatrix $Z_{q,1}^{(v,l)}$ und Einholen des Folgenden als rechteckige Matrix von Kumulanten der Beobachtungen:

$$C_{2q,x,nr}^{(v,l)} \triangleq Z_{q,1}^{(v,l)} \, C_{2q,x}^{(v,l)} \, Z_{q,2}^{(v,l)\,\mathrm{H}},$$

was Folgendes ergibt:

$$C_{2q,x,nr}^{(v,l)} = \sum_{g=1}^{G} Z_{q,1}^{(v,l)} [A_g^{\otimes l} \otimes A_g^{*\otimes(v-l)}] C_{2q,s_g}^{(v,l)} [A_g^{\otimes(q-v+l)} \otimes A_g^{*\otimes(q-l)}]^{\mathrm{H}} Z_{q,2}^{(v,l)\,\mathrm{H}}$$

$$+ \eta_2 \, Z_{1,1}^{(v,l)} \, V(v, l) \, Z_{1,2}^{(v,l)\,\mathrm{H}} \, \delta(q-1)$$

wobei

$\otimes$ das Kronecker-Produkt ist,
$A_g^{\otimes l}$ die $(N^l \times Pg^l)$ Matrix ist, definiert durch $A_g^{\otimes l} = A_g \otimes A_g \otimes \dots \otimes A_g$ mit einer Anzahl $l$ - 1 an Kronecker-Produkten,
G die Anzahl von Gruppen von Quellen ist,
H die Transponente und das Konjugat ist,
$\eta 2$ die mittlere Rauschleistung pro Sensor ist,
$\delta(.)$ das Kronecker-Symbol ist.

5. Verfahren nach Anspruch 4, **dadurch gekennzeichnet, dass** die Matrix für statistisch unabhängige zufällige Quellen benutzt wird.

6. Verfahren nach Anspruch 4, **dadurch gekennzeichnet, dass** die Matrix für statistisch abhängige zufällige Quellen benutzt wird.

7. Verfahren nach Anspruch 4, **dadurch gekennzeichnet, dass** es nur einen virtuellen Sensor aus jeder Gruppe von zusammenfallenden virtuellen Sensoren beibehält.

8. Verfahren nach Anspruch 4, **dadurch gekennzeichnet, dass** es die mit derselben Gruppe von zusammenfallenden virtuellen Sensoren assoziierten virtuellen Sensoren mittelt.

9. Verfahren nach einem der Ansprüche 3 bis 8, **dadurch gekennzeichnet, dass** es wenigstens die folgenden Schritte für die Goniometrie der Quellen beinhaltet:

9.1) Schätzen von $\hat{C}_{2q,x,nr}^{(v,l)}$ der Matrix $C_{2q,x,nr}^{(v,l)}$ auf der Basis von K Beobachtungen $x(k)$, $1 \leq k \leq K$, unter Verwendung eines Schätzglieds der Ordnung 2q;

9.2) singuläre Wertezerlegung der geschätzten Matrix $\hat{C}_{2q,x,nr}^{(v,l)}$ und Schätzen einer orthonormierten Basis des Rauschraums $\hat{U}_{2q,n,nr}^{(v,l)}$;

9.3) Bestimmen, auf der Basis der virtuellen Richtungsvektoren, die mit der rechteckigen Matrix $C_{2q,x,nr}^{(v,l)}$, $\boldsymbol{a}_{q,p,1,nr}^{(v,l)} \triangleq Z_{q,1}^{(v,l)} \boldsymbol{a}_{q,p,1}^{(v,l)}$, assoziiert sind, des nächsten Pseudospektrums, und Suchen nach den Richtungen, die lokale Minima erzeugen:

$$\hat{P}_{\text{NR-}2q\text{-}Music(v,\,l)}(\theta,\,\varphi) \triangleq \boldsymbol{a}_{q,p,1,nr}^{(v,l)\,\text{H}} \hat{U}_{2q,n,nr}^{(v,l)} \hat{U}_{2q,n,nr}^{(v,l)\,\text{H}} \boldsymbol{a}_{q,p,1,nr}^{(v,l)}.$$

10. Vorrichtung zum Schätzen von Ankunftsrichtungen von Einfallsquellen auf einem Netzwerk, das N Schmalbandantennen (21i) umfasst, die jeweils den Beitrag von P Quellen empfangen, wobei die Beobachtungen an jeder Antenne empfangen werden, **dadurch gekennzeichnet, dass** sie ein Verarbeitungsmittel (23, 25) zum Ausführen der Schritte des Verfahrens nach einem der Ansprüche 1 bis 9 umfasst.

**Claims**

1. A method for estimating directions of arrival of incidence sources on an array comprising N narrowband antennae (21i) each receiving the contributions of P sources, the observations received on each antenna generating statistics that can be in the form of a 2q order cumulants matrix, with q>1, the coefficients of which are the circular 2q order cumulants, Cum[$x i_1(t)$,..., $x i_q(t)$, $x i_{q+1}(t)^*$,..., $x i_{2q}(t)^*$], **characterised in that** it comprises at least the following steps:

- ranking the 2q order statistics of the observations in order to obtain a rectangular 2q order matrix $C_{2q,x}^{(v,l)}$ of size ($N^v$ x $N^{2q-v}$), the coefficients of which are the circular 2q order cumulants of the observations, the ranking being carried out as follows:

decomposing a 2q-tuple, ($i_1$,..., $i_q$, $i_{q+1}$,..., $i_{2q}$), of indexes $i_j$ ($1 \leq j \leq 2q$) ($1 \leq i_j \leq N$), into a v-tuple and a (2q-v)-tuple, respectively indexed by v and l, and respectively defined by ($i_1$, $i_2$,..., $i_l$, $i_{q+1}$,..., $i_{q+v-l}$) and ($i_{q+v+l}$,..., $i_{2q}$, $i_{l+1}$,..., $i_q$) where the $N^v$ values of the v-tuple and the $N^{2q-v}$ values of the (2q-v)-tuple are denoted by integers $I_{v,l}$ and $J_{v,l}$, such that $1 \leq I_{v,l} \leq N^v$ and $1 \leq J_{v,l} \leq N^{2q-v}$,

$$I_{v,l} \triangleq \sum_{j=1}^{l} N^{v-j}(i_j - 1) + \sum_{j=1}^{v-l} N^{v-l-j}(i_{q+j} - 1) + 1$$

$$J_{v,l} \triangleq \sum_{j=1}^{q-v+l} N^{2q-v-j}(i_{q+v-l+j} - 1) + \sum_{j=1}^{q-l} N^{q-l-j}(i_{l+j} - 1) + 1$$

- using an invariance property by permutating cumulants and deducing therefrom that:

$$\text{Cum}[x_{i1}(t),\ldots, x_{iq}(t), x_{iq+1}(t)^*, \ldots, x_{i2q}(t)^*] = \text{Cum}[x_{i1}(t),\ldots, x_{il}(t), x_{iq+1}(t)^*, \ldots,$$

$$x_{iq+v-l}(t)^*, x_{iq+v-l+1}(t)^*, \ldots, x_{i2q}(t)^*, x_{il+1}(t),\ldots, x_{iq}(t)],$$

- then considering the preceding element to be the element $[I_{v,l}, J_{v,l}]$ of the rectangular matrix of the cumulants;
- estimating the values of the directions using a goniometry algorithm applied to the estimated rectangular matrix.

2. The method according to claim 1, **characterised in that** a music algorithm is defined by executing the following steps:

2.1) estimating, $\hat{C}_{2q,x}^{(v,l)}$, from the matrix $C_{2q,x}^{(v,l)}$ for $K$ vector samples $x(k)$, $1 \le k \le K$, using a 2q order cumulants estimator of the observations;

2.2) singularly decomposing the matrix $\hat{C}_{2q,x}^{(v,l)}$ and extracting an estimate $\hat{U}_{2q,n}^{(v,l)}$, of the unitary matrix $U_{2q,n}^{(v,l)}$ of the Eigen vectors of $C_{2q,x}^{(v,l)}$;

2.3) computing the estimated pseudo-spectrum by applying the following formula and searching for the directions associated with the local minima of this function:

$$\hat{P}_{2q\text{-}Music(v,\,l)}(\theta,\,\varphi) \triangleq$$

$$[a(\theta,\,\varphi)^{\otimes l} \otimes a(\theta,\,\varphi)^{*\otimes(v-l)}]^{\mathrm{H}} \, \hat{U}_{2q,n}^{(v,l)} \, \hat{U}_{2q,n}^{(v,l)\,\mathrm{H}} \, [a(\theta,\,\varphi)^{\otimes l} \otimes a(\theta,\,\varphi)^{*\otimes(v-l)}]$$

where Music corresponds to the MUSIC function,
$\otimes$ is the Kronecker product,
$a(\theta,\varphi)$. is the direction vector of a source, $\theta$ is the azimuth angle, $\varphi$ is the elevation angle,
$a(\theta,\,\varphi)^{\otimes l} = a(\theta,\,\varphi) \otimes a(\theta,\,\varphi) \otimes \ldots \otimes a(\theta,\,\varphi)$ with a number of Kronecker products equal to $l$ - 1,
q is the selected order, $l$ is the ranking index.

3. The method according to any one of the preceding claims, **characterised in that** it comprises a step in which the redundancy due to the symmetry of the cumulants is eliminated.

4. The method according to claim 3, **characterised in that** it comprises a step of eliminating the redundancy resulting from the virtual direction vectors having components with the same function by defining a right-hand reduction coefficient matrix $Z_{q,2}^{(v,l)}$ and a left-hand reduction coefficient matrix $Z_{q,1}^{(v,l)}$ and obtaining the following as a rectangular matrix of cumulants of the observations:

$$C_{2q,x,nr}^{(v,l)} \triangleq Z_{q,1}^{(v,l)} \, C_{2q,x}^{(v,l)} \, Z_{q,2}^{(v,l)\,\mathrm{H}} \,,$$

which gives:

$$C_{2q,x,nr}^{(v,l)} = \sum_{g=1}^{G} Z_{q,1}^{(v,l)} [A_g^{\otimes l} \otimes A_g^{*\otimes(v-l)}] \, C_{2q,s_g}^{(v,l)} \, [A_g^{\otimes(q-v+l)} \otimes A_g^{*\otimes(q-l)}]^{\mathrm{H}} \, Z_{q,2}^{(v,l)\,\mathrm{H}}$$

$$+ \eta_2 \, Z_{1,1}^{(v,l)} \, V(v,\,l) \, Z_{1,2}^{(v,l)\,\mathrm{H}} \, \delta(q-1)$$

with

⊗ being the Kronecker product,

$Ag^{\otimes l}$ being the ($N^l$ x $Pg^l$) matrix defined by $Ag^{\otimes l} = Ag \otimes Ag \otimes ... \otimes Ag$ with a number of Kronecker products equal to $l$ - 1,

G being the number of groups of sources,

H being the transpose and conjugate,

η2 being the mean noise power per sensor,

δ(.) being the Kronecker symbol.

**5.** The method according to claim 4, **characterised in that** the matrix is used for statistically independent random sources.

**6.** The method according to claim 4, **characterised in that** the matrix is used for statistically dependent random sources.

**7.** The method according to claim 4, **characterised in that** it only retains one virtual sensor from each group of coincident virtual sensors.

**8.** The method according to claim 4, **characterised in that** it averages the virtual sensors associated with the same group of coincident virtual sensors.

**9.** The method according to any one of claims 3 to 8, **characterised in that** it comprises at least the following steps for the goniometry of the sources:

9.1) estimating $\hat{C}_{2q,x,nr}^{(v,l)}$ from the matrix $C_{2q,x,nr}^{(v,l)}$ on the basis of K observations $x(k)$, $1 \le k \le K$, using a 2q order estimator;

9.2) singular value decomposing the estimated matrix $\hat{C}_{2q,x,nr}^{(v,l)}$ and estimating an orthonormal basis of the noise space $\hat{U}_{2q,n,nr}^{(v,l)}$;

9.3) determining, on the basis of the virtual direction vectors associated with the rectangular matrix $C_{2q,x,nr}^{(v,l)}$, $a_{q,p,1,nr}^{(v,l)} \triangleq Z_{q,1}^{(v,l)} \, a_{q,p,1}^{(v,l)}$, the next pseudo-spectrum and searching for the directions generating local minima:

$$\hat{P}_{\text{NR-}2q\text{-}Music(v,\,l)}(\theta, \varphi) \triangleq a_{q,p,1,nr}^{(v,l)}{}^{H} \hat{U}_{2q,n,nr}^{(v,l)} \hat{U}_{2q,n,nr}^{(v,l)}{}^{H} a_{q,p,1,nr}^{(v,l)}.$$

**10.** A device for estimating directions of arrival of incidence sources on an array comprising N narrowband antennae (21i) each receiving the contribution of P sources, the observations received on each antenna, **characterised in that** it comprises a processing means (23, 25) adapted to execute the steps of the method according to any one of claims 1 to 9.

**FIG.1**

**FIG.2**

Plan des antennes

$\theta_m$

$\Delta_m$

$k(\theta_m, \Delta_m)$

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2954513

- EP 2607915 A1

**Littérature non-brevet citée dans la description**

- **P. CHEVALIER ; A. FERREOL ; L. ALBERA.** High resolution direction finding from higher order statistics : the 2q-MUSIC algorithm. *IEEE Trans. Signal Processing,* Août 2006, vol. 54 (8), 2986-2997
- **P. CHEVALIER ; L. ALBERA ; A. FERREOL ; P. COMON.** On the Virtual Array concept for higher order array processing. *IEEE Trans. Signal Processing,* Avril 2005, vol. 53 (4), 1254-1271
- **P. PAL ; P.P. VAIDYANATHAN.** Multiple Level Nested Array: An Efficient Geometry for 2qth-Order Cumulant Based Array Processing. *IEEE Trans. Signal Processing,* Mars 2012, vol. 60 (3), 1253-1269

- **P. PAL ; P.P. VAIDYANATHAN.** Nested Arrays: A Novel approach to array processing with enhanced degrees of freedom. *IEEE Trans. Signal Processing,* Août 2010, vol. 58 (8), 4167-4181
- **A. FERREOL ; P. CHEVALIER.** On the behavior of current second and higher order blind source séparation methods for cyclostationary sources. *IEEE Trans. Signal Processing,* Juin 2000, vol. 48 (6), 1712-1725
- *Errata,* Avril 2002, vol. 50 (4), 990
- **P. MC CULLAGH.** Tensor methods in Statistics. *Chapman and Hall, Monographs on Statistics and applied Probability,* 1987